# EUROPEAN PATENT APPLICATION

(11) **EP 2 685 144 A1**
(43) Date of publication of application: **15.01.2014**
(21) Application number: 12754876.6
(22) Date of filing: 28.02.2012
(51) Int. Cl.: F16K 15/04, F02M 55/00, F16K 17/04

(54) **MEANS FOR MOUNTING CHECK VALVE INTO HOUSING COMPRISING FLUID PATH THEREIN**

(30) Priority: 07.03.2011 JP 2011049273
(71) Applicant: Mikuni Corporation, Tokyo 101-0021 (JP)
(72) Inventor: MAITA, Katsuya, Iwate-gun Iwate 020-0188 (JP)
(74) Representative: Grünecker, Kinkeldey, Stockmair & Schwanhäusser
(86) International application number: PCT/JP2012/054871
(87) International publication number: WO 2012/121054

(57) **Abstract**

There is provided a means for mounting a check valve into a housing including fluid passages therein that can secure a closing property between a valve body and a valve seat by preventing the deformation of the valve seat, can prevent the rattling of the check valve relative to the housing including fluid passages therein and can ensure the flow rate of fluid necessary at the time of start-up. The check valve 10 and a wave washer 54 are put into a housing space 52 of the housing 46 including fluid passages therein, so that the separation of the check valve 10 and the wave washer 54 from the housing space 52 is prevented by retaining means 58 and 62. When the check valve 10 and the wave washer 54 are mounted into the housing space 52, a repulsive force is caused in the wave washer 54. vibration caused by the operation of the check valve 10 is absorbed by the wave washer 54, and an impact applied to the valve seat 24 is reduced and rattling occurring between the housing 46 and the check valve 10 can be prevented.

## Description

### Technical Field

The present invention relates to a means for mounting a check valve into a housing that includes fluid passages therein.

### Background Art

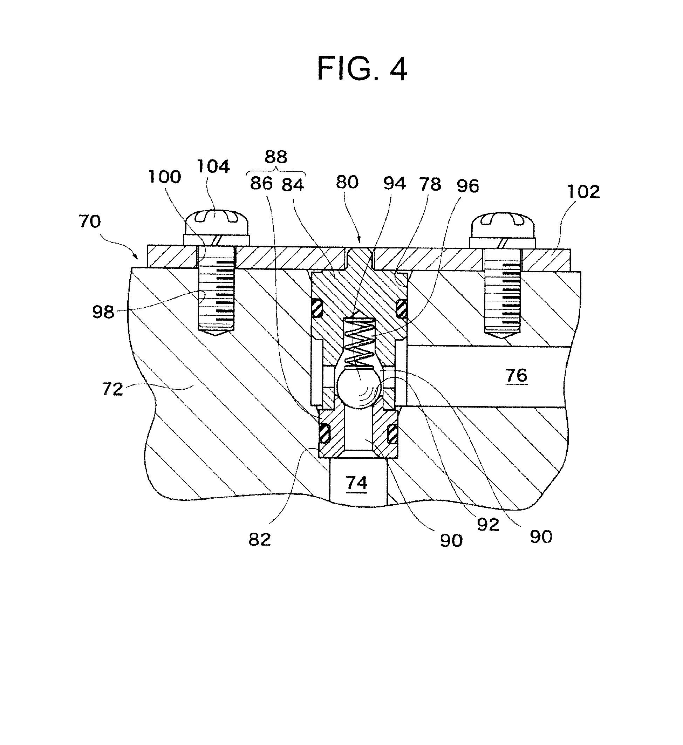

Conventionally, a housing of a device (machine), such as an engine or a fuel pump which includes fluid passages therein, is provided with a check valve for fuel that opens and closes a fuel passage and prevents the backward flow of fuel in the fuel passage. For example, Patent Document 1 discloses the structure of a fuel pump and a check valve for fuel, which is mounted on the fuel pump, in the related art. The structure of the fuel pump and the check valve for fuel in the related art is illustrated in Fig. 4.

An upstream fuel passage 74 into which fuel is introduced from a fuel tank (not illustrated), a downstream fuel passage 76 through which fuel is supplied to an engine (not illustrated), and a housing space 78 that makes the upstream fuel passage 74 and the downstream fuel passage 76 communicate with each other and is formed inward from the outber surface of a casing 72 are formed in the casing 72 of a fuel pump 70. A check valve 80 for fuel is inserted into the housing space 78 of the fuel pump 70, and an insertion front end portion of the check valve comes into contact with a bottom surface 82 of the housing space 78. Then, the check valve 80 for fuel is fixed to the fuel pump 70 by a retaining means so that the check valve 80 for fuel is not separated from the casing 72 of the fuel pump 70. The retaining means will be described later.

The check valve 80 for fuel includes a body 88 that includes a main member 84 and a seat member 86, and a fuel communication passage 90 including two openings is formed in the body 88. When the check valve 80 for fuel is mounted into the fuel pump 70, one opening of the fuel communication passage 90 communicates with the upstream fuel passage 74 and the other opening of the fuel communication passage 90 communicates with the downstream fuel passage 76. A valve seat 92 is provided at one end of the seat member 86, and the valve seat 92 is positioned in the middle of the fuel communication passage 90 of the check valve 80 for fuel. A ball valve 94 that opens and closes the fuel communication passage 90 and a spring 96 that biases the ball valve 94 in the direction in which the ball valve 94 is seated on the valve seat 92 are provided in the middle of the fuel communication passage 90.

In the check valve 80 for fuel having such structure, when an engine stops, the ball valve 94 is seated on the valve seat 92 by a biasing force of the spring 96 so that the fuel communication passage 90 is closed. Accordingly, the upstream fuel passage 74 and the downstream fuel passage 76 are isolated from each other. Meanwhile, when the engine is driven, the fuel pressure of the upstream fuel passage 74 rises and the fuel pressure separates the ball valve 94 from the valve seat 92 against the spring 96 so that the fuel communication passage 90 is opened. Accordingly, the upstream fuel passage 74 and the downstream fuel passage 76 communicate with each other.

A plurality of female screw portions 98 are formed in the casing 72 of the fuel pump 70 around the position of the housing space 78. A plate 102 in which holes 100 having a diameter larger than the diameter of the screw portion are formed at positions corresponding to the female screw portions 98 is mounted on the casing 72 of the fuel pump 70, and the plate 102 is joined to the casing 72 so that the holes 100 of the plate 102 correspond to the positions of the female screw portions 98 of the casing 72. After that, male screws 104 are inserted into the holes 100 of the plate 102 and the male screws 104 are screwed into the female screw portions 98 of the casing 72, so that the plate 102 is fixed to the casing 72 of the fuel pump 70. Since a insertion rear end portion of the check valve 80 for fuel inserted into the housing space 78 comes into contact with the plate 102 fixed to the casing 72 and a insertion front end portion of the check valve 80 for fuel comes into contact with the bottom surface 82 of the housing space 78, the check valve 80 for fuel is interposed between the casing 72 and the plate 102. As a result, the separation of the check valve 80 for fuel from the housing space 78 is prevented and the rattling of the check valve 80 for fuel in the housing space 78 is prevented.

In Patent Document 1, the female screw portions 98 that are formed in the casing 72 of the fuel pump 70, the plate 102 that prevents the separation and rattling of the check valve 80 for fuel, and the male screws 104 that screw the plate 102 to the female screw portions 98 of the casing 72 form a retaining means for retaining the check valve 80 for fuel on the fuel pump 70. The separation of the check valve 80 for fuel from the housing space 78 is prevented by the retaining means, so that the rattling of the check valve 80 for fuel in the housing space 78 is prevented.

Patent Document 2 discloses a means for fixing a check valve for fuel to a fuel pump that is different from the means disclosed in Patent Document 1. In Patent Document 2, a female screw portion is formed on the inner wall surface of a housing space of a casing of a fuel pump and a male screw portion is formed on the outer wall surface of the check valve for fuel. The male screw portion is screwed into the female screw portion, so that the fuel pump and the check valve for fuel are fixed to each other. Meanwhile, the structure of the check valve for fuel disclosed in Patent Document 2 is the same as the structure of the check valve for fuel disclosed in Patent Document 1.

### Patent Document

Patent Document 1: JP 3361987
Patent Document 2: JP 2009-531577

### DISCLOSURE OF THE INVENTION

### Problem to be Solved by the Invention

In Patent Document 1, the plurality of female screw portions 98, which are used to fix the plate 102, are formed in the casing 72 of the fuel pump 70 around the position of the housing space 78 as the retaining means for retaining the check valve 80 for fuel on the fuel pump 70. Since the plurality of female screw portions 98 are formed in the casing 72, there has been a drawback that the size of the casing 72 of the fuel pump 70 is large. Since the check valve 80 for fuel disclosed in Patent Document 1 is interposed and fixed between the plate 102 and the bottom surface 82 of the housing space 78, impact applied to the valve seat 92 by the ball valve 94 is applied to a portion at which the check valve 80 for fuel and the casing 72 of the fuel pump 70 are fixed to each other for a long time. For this reason, there has been a drawback that rattling occurs between the check valve 80 for fuel and the casing 72 of the fuel pump 70. Further, since the check valve 80 for fuel and the casing 72 of the fuel pump 70 are firmly fixed to each other, there is no portion that reduces impact applied to the valve seat 92 by the ball valve 94 and the valve seat 92 is worn by the impact that is applied to the valve seat 92 for a long time by the ball valve 94. For this reason, there is a concern that the closing property of the valve deteriorates.

Meanwhile, in Patent Document 2, the male screw portion is formed on the outer wall surface of the check valve for fuel. In the check valve for fuel where the male screw portion is formed on the outer wall surface, the outer diameter of the casing of the check valve for fuel should be increased by the height of the male screw portion formed on the outer wall surface of the check valve for fuel when the outer diameter of the casing of the check valve for fuel is limited. If the outer diameter of the casing of the check valve for fuel is increased when the outer diameter is limited, the inner diameter of the fuel communication passage or the diameter of the ball valve should be reduced. Since the flow rate of fuel can be supplied to an engine is reduced if the inner diameter of the fuel communication passage is reduced, there has been a drawback that the amount of supplied fuel necessary at the time of start-up is not obtained.

The present invention has been made in consideration of the above-mentioned problems, and an object of the present invention is to provide a means for mounting a check valve into a housing including fluid passages therein that can secure a closing property between a valve body and a valve seat by preventing the deformation of the valve seat, can prevent the rattling of the check valve relative to the housing including fluid passages therein and can ensure the flow rate of fluid necessary at the time of start-up..

### Means for Solving Problem

In order to solve the above-mentioned problems, there is provided a means for mounting a check valve into a housing that includes fluid passages therein. The check valve includes a casing, a fluid communication passage that is formed in the casing, a valve body that opens and closes the middle portion of the fluid communication passage, a seat member that includes a valve seat on which the valve body is seated, and a biasing means for biasing the valve body in the direction in which the valve body is seated on the valve seat. An upstream fluid passage and a downstream fluid passage are formed in the housing, and the housing includes a housing space communicating with both the upstream fluid passage and the downstream fluid passage. The check valve is inserted into the housing space of the housing, and the means mounts the check valve into the housing by a retaining means. An elastic member, which is to be expanded and contracted by a pressing force, is put into the housing space together with the check valve, the separation of the check valve and the elastic member from the housing space of the housing is prevented by the retaining means, and a repulsive force of the elastic member is caused by compression when the separation of the check valve and the elastic member from the housing space is prevented. In the present invention, the elastic member may be disposed between the retaining means and an insertion rear end portion of the check valve in the housing space. In the present invention, the elastic member may be disposed between the bottom surface of the housing space and an insertion front end portion of the check valve in the housing space. In the present invention, the housing may be any one of a pump housing and an engine housing, and the housing space into which the check valve is inserted may be formed in any one of the pump housing and the engine housing. In the present invention, the retaining means may include an annular groove that is formed on an inner peripheral surface of the housing space of the housing including the fluid passages therein, and a retaining member that is fitted to the groove and has an elastic force in the circumferential direction. Further, when the retaining member is fitted to the groove, a part of the retaining member may protrude toward the inside of the housing space and hold the check valve and the elastic member in the housing space. In the present invention, the retaining means may include a protruding portion that is formed on the outer surface of the housing near a position of the housing space of the housing including the fluid passages therein, holes that are formed in the protruding portion, and a pin that is inserted into the holes. Further, when the pin is inserted into the holes, any one of the insertion rear end portion of the check valve and the elastic member may come into contact with the pin and hold the check valve and the elastic member in the housing space. In the present invention, the elastic member may be a wave washer.

### Effect of the Invention

According to the means for mounting a check valve into a housing which includes fluid passages therein according to the present invention, the check valve is held in the housing space in a state where a repulsive force caused by the elastic member is applied to the check valve. Accordingly, it is possible to reduce an impact caused by the collision between the valve body and the valve seat that occurs in the check valve, and to preferably prevent the deformation of the valve seat. Since the deformation of the valve seat is prevented, it is possible to ensure a sealing property between the valve body and the valve seat for a long time. Further, since the vibration or impact of the check valve provided in the housing space is preferably absorbed by the elastic member, it is possible to prevent the rattling of the check valve relative to the structure including fluid passages therein.

Furthermore, according to the means for mounting a check valve into a housing which includes fluid passages therein according to the present invention, for example, a retaining member such as C-ring is mounted in the groove formed in the housing space, so that the separation of the check valve from the housing space of the housing including the fluid passages therein is prevented. Accordingly, female screw portions do not need to be formed in the housing of the pump unlike in Patent Document 1 and a male screw portion does not need to be formed on the body of the check valve unlike in Patent Document 2. As a result, the size of the housing including fluid passages therein does not need to be increased and the thickness of the body of the check valve can be reduced, so that it is possible to increase the diameter of the fluid communication passage formed in the body of the check valve and the diameter of the valve body (ball valve). The increase of the diameter of the fluid passage causes the increase of a flow rate. Accordingly, even though the valve body is not significantly lifted, it is possible to ensure a sufficient passage area by a short lift distance and to ensure the flow rate of fluid necessary at the time of start-up immediately after the opening of a valve that is a problem in the related art. In addition, since a male screw portion is not formed on the body of the check valve, it is not necessary to ensure the strength of the body of the check valve against torsion or stretch. Accordingly, it is possible to use a material such as aluminum or brass that is inexpensive and has good workability, so that it is possible to reduce the cost of a material and the cost of working. Moreover, it is possible to remove a concern that foreign materials are put into the housing space from a screw portion at the time of assembly.

Further, if the elastic member is disposed between the insertion rear end portion of the check valve and the retaining member, the insertion front end portion of the check valve comes into contact with a bottom surface of the housing space of the housing including the fluid passages therein. Accordingly, a clearance space in which the elastic member is to be disposed is not formed between the insertion front end portion of the check valve and the bottom surface of the housing space of the housing that includes the fluid passages therein. Since the clearance space is not formed, air bubbles (air or vapor) generated when fluid introduced into the fluid communication passage of the check valve is stirred in the clearance space are not generated. Accordingly, the stasis of fluid in the clearance space does not occur, so that it is possible to stabilize the flow rate of fluid or fluid pressure. Furthermore, since the elastic member does not come into direct contact with fluid, the durability or reliability of the elastic member itself is also improved.

### BRIEF DESCRIPTION OF THE DRAWINGS

Fig. 1 is a cross-sectional view illustrating an embodiment of a means for mounting a check valve into a housing which includes fluid passages therein, according to the present invention;
Fig. 2 is a cross-sectional view illustrating another embodiment of a means for mounting a check valve into a housing which includes fluid passages therein, according to the present invention;
Fig. 3 is a cross-sectional view illustrating still another embodiment of a means for mounting a check valve into a housing which includes fluid passages therein, according to the present invention; and
Fig. 4 is a cross-sectional view illustrating a pump in the related art and a check valve.

### Reference Numerals

- 10: check valve
- 12: main member
- 14: seat member
- 16: casing
- 18: fluid communication passage
- 20: first space
- 20a: first space main area
- 22: second space
- 24: valve seat
- 26: ball valve
- 28: spring
- 34: filter holding member
- 44: device including fluid passages therein
- 46: housing
- 48: upstream fluid passage
- 50: downstream fluid passage
- 52: housing space
- 54: wave washer
- 58: groove
- 60: clearance space
- 62: clip
- 64: cylindrical protruding portion
- 66: pin
- 68: insertion hole

### DETAILED DESCRIPTION OF THE INVENTION

The present invention relates to a means for mounting a check valve into a housing that includes fluid passages therein.

### First embodiment

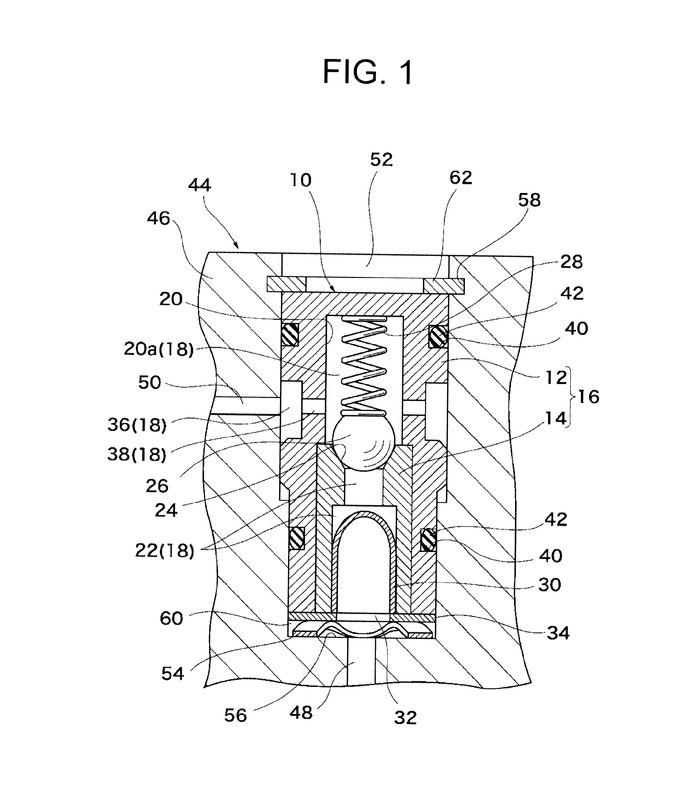

The present invention will be described below with reference to the drawings. Fig. 1 is a cross-sectional view illustrating an embodiment of a means for mounting a check valve into a housing which includes fluid passages therein, according to the present invention. The present invention can be applied to not only fuel but also various kinds of fluid. A check valve 10 in this embodiment includes a casing 16 that is formed by the combination of a main member 12 and a seat member 14, and a fluid communication passage 18 including two openings is formed in the casing 16. The casing 16 of which one opening of the fluid communication passage 18 including the two openings communicates with an upstream fluid passage 48 of a housing 46 (to be described below) including fluid passages to be described below therein and the other opening of the fluid communication passage communicates with a downstream fluid passage 50 of the housing 46 including the fluid passages to be described below therein has been formed by two members, that is, the main member 12 and the seat member 14. However, the outer surface of the casing 16 may be formed by only the main member 12.

The main member 12 has a bottomed cylindrical shape, and a first space 20 of which one end is opened is formed in the main member 12. The seat member 14 has a cylindrical shape, and a second space 22 of which both ends are opened is formed in the seat member 14. A valve seat 24 is formed on one end face of the seat member 14, and the seat member 14 is inserted into the first space 20 of the main member 12 so that the valve seat 24 is positioned in the forefront. The main member 12 and the seat member 14 are fixed to each other by an already-known retaining means so that the valve seat 24 of the seat member 14 is positioned at the substantially middle position of the first space 20 of the main member 12 in the axial direction. When the main member 12 and the seat member 14 are fixed to each other, the first space 20 of the main member 12 is formed by an area in which the seat member 14 is present and an area in which the seat member 14 is not present. The area in which the seat member 14 is not present is referred to as a first space main area 20a. The first space main area 20a communicates with the second space 22 of the seat member 14. The first space main area 20a of the main member 12 and the second space 22 of the seat member 14 form a part of the fluid communication passage 18.

A ball valve (valve body) 26 to come into contact with the valve seat 24 and a spring 28 as a biasing means for making the ball valve 26 be seated on the valve seat 24 are provided in the first space main area 20a. A filter 30, which removes air bubbles (air or vapor) or foreign materials mixed in the fuel flowing into the check valve 10, is provided in the second space 22 of the seat member 14. It is preferable that the opened end face of the first space 20 of the main member 12 and an end face of a insertion rear end portion of the cylindrical seat member 14 form the same plane 32 when the seat member 14 is inserted and fixed into the first space 20 of the main member 12. However, the present invention is not necessarily limited thereto. An annular filter holding member 34, which holds the filter 30 therein so that the filter 30 is not separated from the second space 22 of the seat member 14, is provided on the same plane 32 of the main member 12 and the seat member 14. Meanwhile, if the filter 30 mounted in the second space 22 of the seat member 14 has elasticity not to be separated from the second space 22 of the seat member 14, the filter holding member 34 may be omitted.

The ball valve 26 is housed in the first space main area 20a to be movable in the axial direction. When an engine stops, a spring 28 provided in the first space main area 20a to be compressed along the axial direction makes the ball valve 26 be seated on the valve seat 24. While the ball valve 26 is seated on the valve seat 24, the first space main area 20a and the second space 22 of the seat member 14 are isolated from each other by the ball valve 26 and the fluid communication passage 18 of the check valve 10 is closed. Meanwhile, when the engine is driven, the pressure of fluid present in the second space 22 of the seat member 14 separates the ball valve 26 from the valve seat 24 against a biasing force of the spring 28 that makes the ball valve 26 be seated on the valve seat 24. Accordingly, the fluid communication passage 18 of the check valve 10 is opened.

An annular recess 36, which is formed circumferentially along the outer wall of the main member 12, is formed on the outer wall of the main member 12, and the annular recess 36 and the first space main area 20a formed in the main member 12 communicate with each other through a through hole 38. The through hole 38 and the annular recess 36 form a part of the fluid communication passage 18. Two O-ring grooves 40, which are formed circumferentially along the outer wall of the main member 12, are formed on the outer wall of the main member 12 at front and rear positions of the position of the annular recess 36 in the axial direction, and O-rings 42 are mounted in the O-ring grooves 40, respectively.

The check valve 10 having the above-mentioned structure is mounted into the housing 46 of a device 44 (a machine such as an engine or a pump) that includes fluid passages therein. Hereinafter, the housing 46 is a housing of "a member in which a fluid passage is formed" or "a machine, such as an engine or a pump, including fluid passages therein". The upstream fluid passage 48 through which fluid is introduced from, for example, a fuel tank (not illustrated) and the downstream fluid passage 50 through which fluid is sent to, for example, an engine (not illustrated) are formed in the housing 46. The housing 46 is further provided with a housing space 52 that is formed inward from the outer wall, and the housing space 52 communicates with the upstream fluid passage 48 and the downstream fluid passage 50.

The check valve 10 is inserted into the housing space 52 formed in the housing 46. However, in the first embodiment, an annular wave washer 54 as an elastic member is put into the housing space 52 first and the check valve 10 is then inserted into the housing space 52. The wave washer 54 as an elastic member is an annular O-ring that is tortuous upward and downward in the height direction, and a central space is formed by a hole through which fluid can pass.

If a pressing force toward the wave washer 54 is applied to the check valve 10 while the wave washer 54 and the check valve 10 are put into the housing space 52, the wave washer 54 is compressively deformed in the insertion direction (axial direction), so that the height of the wave washer 54 is reduced. Meanwhile, if a pressing force is not applied to the wave washer 54, the height of the wave washer 54 returns to an original height due to a repulsive force. When the check valve 10 is inserted into the housing space 52, one side of the annular wave washer 54 comes into contact with a bottom surface 56 that is positioned on the inner side of the housing space 52 and the other side thereof comes into contact with the annular filter holding member 34 (a insertion front end portion of the housing 24). Since the wave washer 54 is interposed between the bottom surface 56 of the housing space 52 and the insertion front end portion of the housing 24, a clearance space 60 corresponding to the height of the wave washer 54 in the vertical direction is formed in the housing space 52 that is formed between the bottom surface 56 and the insertion front end of the check valve 10. The clearance space 60 forms a part of the fluid communication passage 18.

An annular groove 58, which is formed circumferentially along the inner wall surface, is formed near the opening of the housing space 52 on the inner wall of the housing space 52 of the housing 46. A clip 62, which is a retaining member, is fitted and mounted in the groove 58. The clip 62 is a C-shaped elastic metal plate (so-called C-ring) the size of which is set so that the C-elastic metal plate is exactly fitted to the annular groove 58, and has elasticity in the circumferential direction. The C-shaped inner edge of the clip 62 has a size that is set so that the C-shaped inner edge of the clip 62 protrudes toward the inside of the housing space 52 in the radial direction when the clip 62 is mounted in the groove 58 of the housing space 52. The clip 62, which is a retaining member, and the groove 58 form a retaining means.

For the mounting of the check valve 10 in the housing space 52 of the housing 46, the wave washer 54 is inserted into the housing space 52 of the housing 46 first and the check valve 10 (to which the filter holding member 34 has been mounted) is then inserted into the housing space. Meanwhile, when the filter holding member 34 is not mounted on the check valve 10, the annular wave washer 54 is put into the housing space 52 of the housing 46 first, the annular filter holding member 34 is put into the housing space, and the check valve 10 is then put into the housing space. When the wave washer 54 and the check valve 10 are put into the housing space 52 of the housing 46, the position of the rear end portion of the casing 16 (main member 12) in the insertion direction is the same as the position of the opening of the groove 58 in the height direction. Accordingly, the clip 62 cannot be fitted to the groove 58.

In this state, the check valve 10 is pressed toward the inner side (bottom surface 56) of the housing space 52 of the housing 46. The wave washer 54 can be displaced in the height direction. Accordingly, when the check valve 10 is pressed in the axial direction, the wave washer 54 is compressed, the height of the wave washer 54 is reduced, and the check valve 10 is moved toward the bottom surface 56 of the housing space 52. When the check valve 10 is moved toward the bottom surface 56 of the housing space 52 while compressing the wave washer 54, the circumferential opening of the groove 58 covered with the insertion rear end portion of the check valve 10 is exposed to the outside so that the clip 62 can be mounted in the groove 58. In this state, the clip 62 is mounted in the groove 58. When the wave washer 54 is compressed and the height of the wave washer 54 is reduced, an elastic force caused by the compression, that is, a repulsive force is accumulated in the wave washer 54.

When a pressing force applied to the check valve 10 is removed after the clip 62 is mounted in the groove 58, a force for separating the check valve to the outside from the housing space 52 is applied to the check valve 10 by the repulsive force of the compressed wave washer 54. However, the insertion rear end portion of the check valve 10 comes into contact with the clip 62 mounted in the groove 58, so that the rush of the check valve 10 to the outside from the housing space 52 is prevented. The wave washer 54 is set so that a repulsive force caused by the compression remains in the wave washer 54 (a state in which the wave washer is compressed and the height of the wave washer is reduced is maintained) when the check valve 10 comes into contact with the clip 62. It is preferable that the retaining means for preventing the check valve 10 from being separated from the housing space 52 be formed by the groove 58 and the clip 62 that is a retaining member to be fitted to the groove 58, but the retaining means is not limited to this structure.

When the check valve 10 is mounted in the housing space 52 of the housing 46 by the retaining means, the check valve 10 is held by the housing 46 without being separated from the housing space 52. In this state, a repulsive force is caused in the wave washer 54. Further, in this state, the upstream fluid passage 48 of the housing 46 communicates with the second space 22 of the seat member 14 through the clearance space 60 in which the wave washer 54 of the check valve 10 is disposed. Meanwhile, the downstream fluid passage 50 of a structure 44 communicates with the annular recess 36 formed in the main member 12 of the check valve 10, and communicates with the first space main area 20a, which is formed in the main member 12, through the annular recess 36 and the through hole 38.

In the check valve 10, the ball valve 26 is pressed against and collides with the valve seat 24 by a biasing force of the spring 28 when the ball valve 26 is seated on the valve seat 24. In the present invention, vibration or impact generated when the ball valve 26 of the check valve 10 collides with the valve seat 24 is absorbed by the wave washer 54 that is provided between the insertion front end portion of the check valve 10 and the bottom surface 56 of the housing space 52 of the housing 46. That is, it is possible to prevent the deformation of the valve seat 24, which is caused by the collision of the ball valve 26, by reducing impact, which is caused by the collision between the ball valve 26 and the valve seat 24, by the wave washer 54. Since it is possible to prevent the deformation of the valve seat 24 in the present invention, it is possible to ensure a good sealing property between the ball valve 26 and the valve seat 24 for a long time and to keep the stable flow rate of fluid and fluid pressure in the fluid communication passage 18. Further, since the vibration or impact of the check valve 10 against the housing 46 in the axial direction is elastically absorbed by the wave washer 54, it is also possible to prevent the rattling of the check valve 10 in the housing space 52 of the housing 46.

In Patent Document 1, the plate separate from the pump are used and the check valve for fuel is interposed between the housing of the pump and the plate (the separation of the check valve for fuel is prevented). For this reason, female screw portions, which are used to fix the plate, have been formed in the housing of the pump. In contrast, the clip 62 having elasticity in the circumferential direction is fitted to the groove 58 formed in the housing space 52 in the present invention, so that the separation of the check valve 10 from the housing space 52 is prevented. Accordingly, in the present invention, female screw portions into which bolts are screwed may not be formed in the housing of the pump disclosed in Patent Document 1.

In the present invention, a male screw portion may not be formed on the outer wall of the casing of a check valve unlike in Patent Document 2. Accordingly, in the present invention, it is possible to reduce the thickness of the casing 16 of the check valve 10 and to increase the diameter of the fluid communication passage 18 formed in the check valve 10. The increase of the diameter of the fluid communication passage 18 causes the increase of a flow rate. Accordingly, even though the ball valve 26 is not significantly lifted, it is possible to obtain a sufficient opening area by a short lift distance and to ensure the flow rate of fluid necessary at the time of start-up. Therefore, it is possible to increase the flow rate at the time of start-up immediately after the opening of a valve, which has been a problem in the related art. Further, since a screw portion (male screw portion) is not formed on the casing 16 of the check valve 10 in the present invention, it is not necessary to ensure the strength of the casing 16 of the check valve 10 against torsion or stretch. Accordingly, it is possible to use a material such as aluminum or brass that is inexpensive and has good workability, so that it is possible to reduce the cost of a material and the cost of working. In addition, since a restriction on the disposition of parts in the vertical direction of the check valve 10 (the insertion direction of the housing space 52 of the housing 46) is particularly reduced, it is possible to achieve the reduction of a size (particularly, the reduction of the entire length of the check valve 10) or to remove a concern that foreign materials are generated from a screw portion at the time of assembly.

### Second embodiment

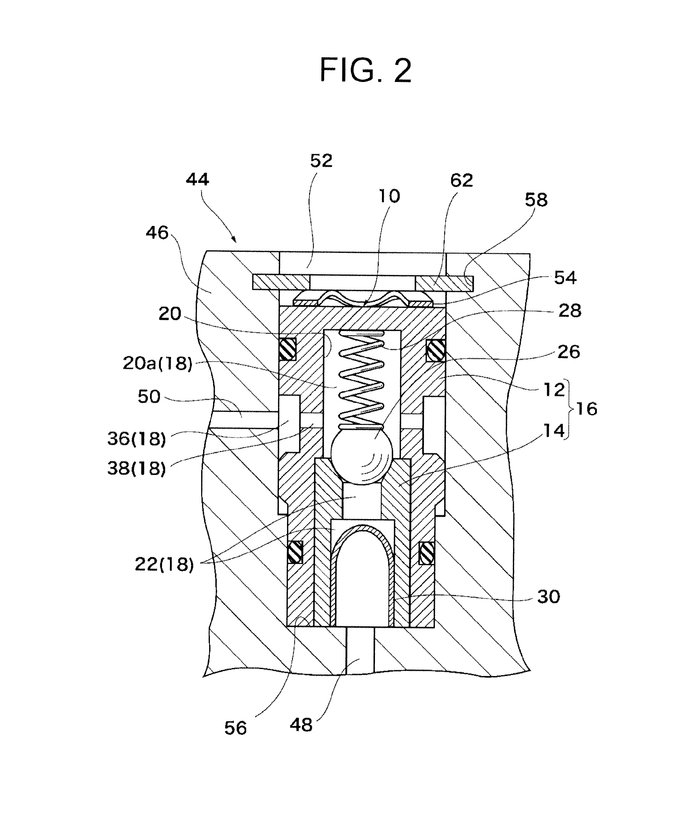

Next, another embodiment of the check valve for fuel according to the present invention will be described. Fig. 2 is a cross-sectional view illustrating another embodiment of the check valve for fuel according to the present invention. In the check valve 10 illustrated in Fig. 1, the annular wave washer 54 has been provided on the inner side of the housing space 52 of the housing 46. Then, the check valve 10 has been inserted into the housing space 52 of the housing 46. In the first embodiment, the clearance space 60 in which the annular wave washer 54 is provided has been formed on the inner side of the housing space 52. However, since fluid is stirred in the clearance space 60 by the wave washer 54, there has been a concern that the generation of air bubbles (air or vapor) or the stasis of fluid occurs.

In a second embodiment illustrated in Fig. 2, the wave washer 54 that is an elastic member is not provided on the inner side of the housing space 52 of the housing 46. In the second embodiment, the check valve 10 is inserted into the innermost side of the housing space 52 of the housing 46. Then, the wave washer 54 that is an elastic member is put into the housing space 52 of the housing 46. When the wave washer 54 is put into the housing space 52 of the housing 46, the wave washer 54 is positioned at the opening of the groove 58 while an external force is not applied to the wave washer 54. Accordingly, the clip 62 cannot be mounted in the groove 58 in this state. When the wave washer 54 is pressed in the axial direction, the height of the wave washer 54 is reduced and the opening of the groove 58 is exposed to the outside. Since the opening of the groove 58 is exposed to the outside, it is possible to mount the clip 62 in the groove 58.

When the clip 62 is mounted in the groove 58, the wave washer 54 that is an elastic member is interposed between the insertion rear end portion of the check valve 10 and the clip 62 while being elastically compressed in the vertical direction (while the height of the wave washer is reduced). Since the wave washer 54 is disposed outside the fluid communication passage 18 passing through the check valve 10 in the second embodiment, the clearance space 60 described in the first embodiment is not formed in the housing space 52. Accordingly, it is possible to prevent the generation of air bubbles in the clearance space 60. Further, since fuel does not come into direct contact with the wave washer 54, the durability or reliability of the wave washer 54 itself is also improved. The second embodiment also has the same effect as the first embodiment.

### Third embodiment

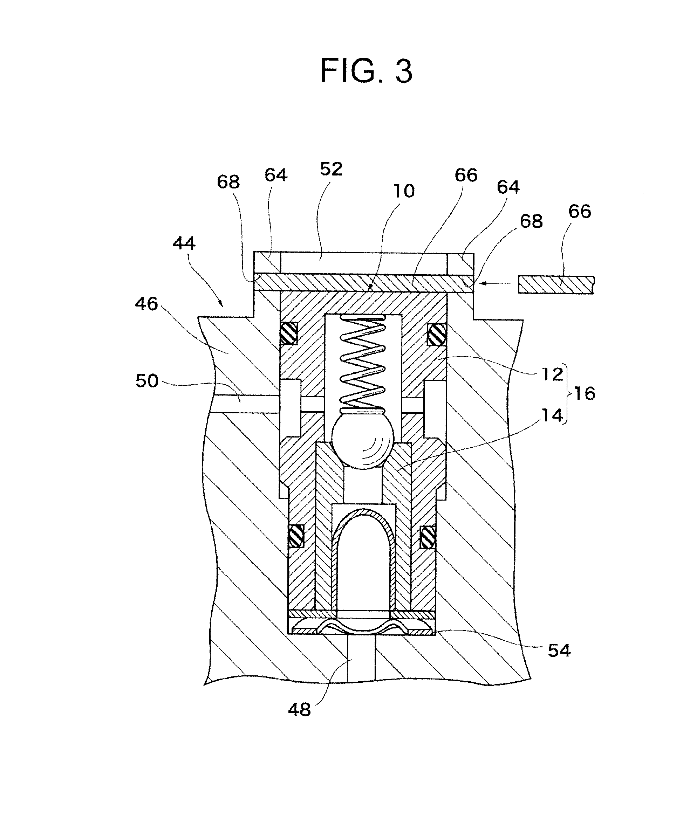

Next, still another embodiment of the check valve for fuel according to the present invention will be described. Fig. 3 is a cross-sectional view illustrating still another embodiment (third embodiment) of the check valve for fuel according to the present invention. In the third embodiment, means different from the clip 62 and the groove 58 which have been used in the first embodiment or the second embodiment, are employed as a retaining means for preventing a check valve 10 from being separated from a housing 46. In the third embodiment, a cylindrical protruding portion 64 is formed integrally with the housing 46 on the outer surface of the housing 46 of a structure 44 around a position at which a housing space 52 is formed. Two insertion holes 68 into which a pin 66 is inserted and fitted are formed in the cylindrical protruding portion 64 in the direction perpendicular to the axial direction of the housing space 52. The pin 66 that is retaining member is inserted into the two insertion holes 68.

In the third embodiment, as in the first embodiment, a wave washer 54 that is as an elastic member is put into the housing space 52 first and the check valve 10 is then inserted into the housing space 52. When an external force compressing the wave washer 54 is not applied, the insertion rear end portion of the check valve 10 is positioned at a position of a line along which the two insertion holes 68 of the housing space 52 communicate with each other. Accordingly, it is not possible to insert the pin 66 into the two insertion holes 68. Here, the check valve 10 is pressed toward the inner side of the housing space 52 so that the wave washer 54 is compressed. Then, the pin 66 is inserted into the two insertion hole 68 so that the separation of the check valve 10 from the housing space 52 can be prevented. When the check valve 10 is made to come into contact with the pin 66 by the wave washer 54, an elastic force of the wave washer 54 presses the check valve 10 against the pin 66. In the third embodiment, the wave washer 54 may come into contact with the pin 66. The third embodiment also has the same effect as the first embodiment.

A housing space 52 may be formed in the housing 46 of a pump such as a fuel pump, the check valve 10 may be inserted into the housing space 52, a passage for fluid to be discharged from a pump chamber of the pump may be used as the upstream fluid passage 48, and the downstream fluid passage 50 for fluid, which is discharged through the housing space 52 communicating with the upstream fluid passage 48, may be connected to other pipes. Further, a fluid passage through which fluid passes may be provided in the housing of an engine, a housing space may be formed in a part of the fluid passage, the check valve 10 is inserted into the housing space 52, a passage through which fluid discharged from a fuel pump or the like is supplied to the check valve 10 may be used as the upstream fluid passage 48, and a passage through which fluid discharged from the check valve 10 passes may be used as the downstream fluid passage 50.

## Claims

1. A means for mounting a check valve into a housing which includes fluid passages therein, the check valve including a casing, a fluid communication passage that is formed in the casing, a valve body that opens and closes a middle portion of the fluid communication passage, a seat member that includes a valve seat on which the valve body is seated, and a biasing means for biasing the valve body in a direction in which the valve body is seated on the valve seat, the housing in which an upstream fluid passage and a downstream fluid passage are formed and which includes a housing space communicating with both the upstream fluid passage and the downstream fluid passage, and the check valve being inserted into the housing space of the housing and the means for mounting the check valve into the housing by a retaining means,
wherein an elastic member, which is to be expanded and contracted by a pressing force, is put into the housing space together with the check valve,
a separation of the check valve and the elastic member from the housing space of the housing is prevented by the retaining means, and
a repulsive force of the elastic member is caused by compression when the separation of the check valve and the elastic member from the housing space is prevented.

2. The means for mounting the check valve into the housing which includes the fluid passages therein according to claim 1,
wherein the elastic member is disposed between the retaining means and a insertion rear end portion of the check valve in the housing space.

3. The means for mounting the check valve into the housing which includes the fluid passages therein according to claim 1,
wherein the elastic member is disposed between a bottom surface of the housing space and a insertion front end portion of the check valve in the housing space.

4. The means for mounting the check valve into the housing which includes the fluid passages therein according to claim 1,
wherein the housing is any one of a pump housing and an engine housing, and the housing space into which the check valve is inserted is formed in any one of the pump housing and the engine housing.

5. The means for mounting the check valve into the housing which includes the fluid passages therein according to any one of claims 1 to 4,
wherein the retaining means includes an annular groove that is formed on an inner peripheral surface of the housing space of the housing including the fluid passages therein, and a retaining member that is fitted to the groove and has an elastic force in a circumferential direction, and
when the retaining member is fitted to the groove, a part of the retaining member protrudes toward an inside of the housing space and holds the check valve and the elastic member in the housing space.

6. The means for mounting the check valve into the housing which includes the fluid passages therein according to any one of claims 1 to 4,
wherein the retaining means includes a protruding portion that is formed on an outer surface of the housing near a position of the housing space of the housing including the fluid passages therein, a hole that is formed in the protruding portion, and a pin that is inserted into the hole,
when the pin is inserted into the hole, any one of the insertion rear end portion of the check valve and the elastic member comes into contact with the pin and holds the check valve and the elastic member in the housing space.

7. The means for mounting the check valve into the housing which includes the fluid passages therein according to any one of claims 1 to 6,
wherein the elastic member is a wave washer.
